(19) Europäisches Patentamt
European Patent Office
Office européen des brevets

(11) **EP 4 700 428 A1**

(12) **EUROPEAN PATENT APPLICATION**

(43) Date of publication:
**25.02.2026 Bulletin 2026/09**

(51) International Patent Classification (IPC):
**G01S 7/48** (2006.01) **G01S 17/89** (2020.01)
**G01S 17/931** (2020.01)

(21) Application number: **25180469.6**

(22) Date of filing: **03.06.2025**

(52) Cooperative Patent Classification (CPC):
**G01S 17/931; G01S 7/4808; G01S 17/89**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.08.2024 KR 20240112680**

(71) Applicants:
• **Hyundai Motor Company
Seoul 06797 (KR)**

• **Kia Corporation
Seoul 06797 (KR)**

(72) Inventor: **KIM, Jae Kyun
18280 Hwaseong-si, Gyeonggi-do, (KR)**

(74) Representative: **Viering, Jentschura & Partner
mbB
Patent- und Rechtsanwälte
Am Brauhaus 8
01099 Dresden (DE)**

(54) **METHOD AND APPARATUS FOR CALCULATING LATERAL OFFSET OF OBJECT**

(57)    A method and an apparatus for calculating a lateral offset of an object. An aspect of the present disclosure provides a method for calculating a lateral offset between a vehicle and an object, the method comprising: obtaining driving information of the vehicle and position information of the object using at least one sensor included in the vehicle, wherein the position information of the object comprises coordinates of the object with respect to a reference coordinate system at the current time point; calculating a y-axis coordinate of the vehicle according to a x-axis coordinate of the vehicle using a driving trajectory approximation that represents a lateral travel distance according to a longitudinal travel distance of the vehicle, wherein the driving trajectory approximation is determined based on a small angle approximation and the driving information of the vehicle; and calculating the lateral offset using the y-axis coordinate of the vehicle and the y-axis coordinate of the object.

**FIG. 2A**

## Description

## CROSS-REFERENCE TO RELATED APPLICATION

This application claims priority to Korean Patent Application No. 10-2024-0112680, filed on August 22, 2024 in the Korea Intellectual Property Office, the entire contents of which are incorporated herein by reference.

## TECHNICAL FIELD

The present disclosure relates to a method and an apparatus for calculating a lateral offset of an object. More specifically, the present disclosure relates to a method and an apparatus for calculating the lateral offset of an object around a vehicle using an approximation that replaces square root operations, thereby eliminating the needs for square root operations.

## BACKGROUND

The matters described in this Background section are only for enhancement of understanding of the background of the disclosure, and should not be taken as acknowledgement that they correspond to prior art already known to those skilled in the art.

Autonomous vehicles equipped with lidar sensors express object information in the form of point cloud data and transmit information on the shape and position of the object through a plurality of points. To determine the possibility of collision between the autonomous vehicle and a particular point, lateral offset between the vehicle and the point should be calculated, which involves square root operations.

However, square root operation requires a large amount of computation, which greatly increases the computation time and the use of computational resources of the autonomous driving system; moreover, floating point and square root operations are often unsupported in the Micro Controller Unit (MCU) controller environments.

Therefore, various methods have been devised to perform square root operations within a short time period using a small amount of computational resources. For example, the Babylonian algorithm sets an initial guess and repeatedly performs four arithmetic operations to obtain an approximate value of the square root. The Babylonian algorithm iterates arithmetic operations to find square roots. The Babylonian algorithm may obtain increasingly accurate square root values by reducing the error between its output and the actual square root through iterations of the four arithmetic operations. However, power consumption increases as the number of repetitions of the four arithmetic operations increases. Applying the Babylonian algorithm, which requires repeated execution of the four arithmetic operations, is challenging for low-power systems. Also, the Babylonian algorithm has a problem in that the computation time increases in proportion to the number of repetitions of the four arithmetic operations, making it unsuitable for systems that require high-speed operation.

Point cloud data consists of thousands of points. To efficiently calculate the lateral offsets for the point cloud data, an alternative method to perform square root operations is required.

## SUMMARY

An object of the present disclosure is to provide a method and an apparatus for replacing square root operations using small angle approximation and symmetric transformation.

An object of the present disclosure is to provide a method and an apparatus for calculating lateral offsets without involving square root operations.

Technical objects to be achieved by the present disclosure are not limited to those described above, and other technical objects not mentioned above may also be clearly understood from the detailed descriptions given below by those skilled in the art to which the present disclosure belongs.

An embodiment of the present disclosure provides a method for calculating a lateral offset between a vehicle and an object, the method comprising: obtaining driving information of the vehicle and position information of the object using at least one sensor included in the vehicle, wherein the position information of the object comprises coordinates of the object with respect to a reference coordinate system at the current time point; calculating a y-axis coordinate of the vehicle according to a x-axis coordinate of the vehicle using a driving trajectory approximation that represents a lateral travel distance according to a longitudinal travel distance of the vehicle, wherein the driving trajectory approximation is determined based on a small angle approximation and the driving information of the vehicle; and calculating the lateral offset using the y-axis coordinate of the vehicle and the y-axis coordinate of the object.

Another embodiment of the present disclosure provides an apparatus for calculating a lateral offset between a vehicle and an object, the apparatus comprising: at least one memory configured to store one or more instructions; and at least one processor configured to execute one or more instructions stored in the memory, wherein the at least one processor executes the one or more instructions to: obtain driving information of the vehicle and position information of the object using at least one sensor included in the vehicle, wherein the position information of the object comprises coordinates of the object with respect to a reference coordinate system at the current time point; calculate a y-axis coordinate of the vehicle according to a x-axis coordinate of the vehicle using a driving trajectory approximation that represents a lateral travel distance according to a longitudinal travel distance of the vehicle, wherein the driving trajectory approximation is determined based on a small angle approximation and the driving information of the vehicle; and calculate the lateral offset using the y-axis coordinate of the vehicle and the y-axis coordinate of the object.

According to one embodiment of the present disclosure, lateral offsets may be calculated without performing square root operations.

The advantageous effects of the present disclosure are not limited to those described above; other advantageous effects of the present disclosure not mentioned above may be understood clearly by those skilled in the art from the descriptions given below.

## BRIEF DESCRIPTION OF THE DRAWINGS

FIG. 1 shows a block diagram of a lateral offset calculation device according to one embodiment of the present disclosure.

FIGS. 2a and 2b illustrate a method for calculating an approximate value of the lateral offset by a lateral offset calculation device according to one embodiment of the present disclosure.

FIGS. 3a to 3c illustrate a method for calculating an approximate value of the lateral offset by a lateral offset calculation device according to one embodiment of the present disclosure when small angle approximation is not applicable.

FIG. 4 is a flow diagram illustrating a process of calculating a lateral offset approximate value by a lateral offset calculation device according to one embodiment of the present disclosure.

FIG. 5 is a block diagram of an exemplary computing device that may be used for implementing the method or the apparatus according to the present disclosure.

## DETAILED DESCRIPTION

Hereinafter, some exemplary embodiments of the present disclosure will be described in detail with reference to the accompanying drawings. In the following description, like reference numerals preferably designate like elements, although the elements are shown in different drawings. Further, in the following description of some embodiments, a detailed description of known functions and configurations incorporated therein will be omitted for the purpose of clarity and for brevity.

Additionally, various terms such as first, second, A, B, (a), (b), etc., are used solely to differentiate one component from the other but not to imply or suggest the substances, order, or sequence of the components. Throughout this specification, when a part 'includes' or 'comprises' a component, the part is meant to further include other components, not to exclude thereof unless specifically stated to the contrary. The terms such as 'unit', 'module', and the like refer to one or more units for processing at least one function or operation, which may be implemented by hardware, software, or a combination thereof.

The following detailed description, together with the accompanying drawings, is intended to describe exemplary embodiments of the present invention, and is not intended to represent the only embodiments in which the present invention may be practiced.

Lateral offset $D_{Lat}$ according to the present disclosure refers to the distance between a vehicle and an object (or a point included in a point cloud data) in a direction perpendicular to the driving direction of the vehicle.

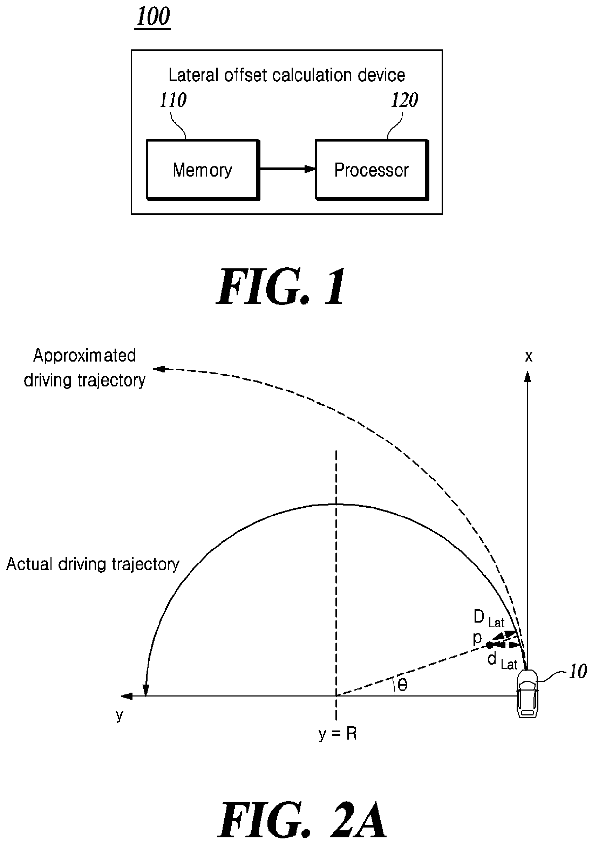

FIG. 1 shows a block diagram of a lateral offset calculation device according to one embodiment of the present disclosure.

The lateral offset calculation device 100 comprises a memory 110 and a processor 120. The lateral offset calculation device 100 may be implemented in the form of an electronic device within an embedded device, a server, or an autonomous navigation system. Not all blocks shown in FIG. 1 are essential components, and a portion of blocks included in the lateral offset calculation device 100 may be added, modified, or deleted in other embodiments. Meanwhile, the constituting elements shown in FIG. 1 represent functionally distinct elements, and at least one constituting element may be implemented in a form in which it is integrated with another element in the actual physical environment.

The memory 110 stores data and commands required for the operation of the lateral offset calculation device 100.

The memory 110 may store driving information of the vehicle acquired using at least one sensor included in the vehicle. The driving information of the vehicle may include the position, speed, acceleration, steering angle, steering angular velocity, heading angle, and/or yaw rate of the autonomous driving vehicle.

The memory 110 may store the position information of an object acquired using at least one sensor included in the vehicle. The position information of the object may include the object's position, speed, and other related data. The position information of the object may be expressed as point cloud data. The point cloud data is obtained when an object is sensed by a lidar sensor and other similar devices and consists of a collection of points. Information on the object, such as the shape and position of the object, may be represented through point cloud data.

The position of the object (or point) may be expressed as coordinates $(x_{obj}, y_{obj})$ in the reference coordinate system at the current time point where the vehicle is located at the origin of the reference coordinate system. $x_{obj}$ is the distance between the object and the vehicle measured along the driving direction of the vehicle, and $y_{obj}$ is the distance between the object and the vehicle along the direction perpendicular to the driving direction of the vehicle.

The processor 120 controls the overall operation of the lateral offset calculation device 100. The processor 120 may be implemented as one or more processors. The processor 120 may execute commands stored in the memory 110.

The processor 120 may determine an approximation of a trajectory along which the vehicle is driving using the vehicle's driving information and employing the small angle approximation. Eq. 1 represents an approximation of a vehicle's driving trajectory according to the present disclosure.

[Eq. 1]

$$ y_{sv} = \frac{1}{2} \rho \, x_{sv}^2 $$

In Eq. 1, $x_{sv}$ represents the x-axis coordinate of the vehicle, $y_{sv}$ represents the y-axis coordinate of the vehicle, and $\rho$ represents the curvature of the trajectory along which the vehicle is driving.

If the vehicle speed is $V$, and the heading angle of the vehicle is $\theta$, the vehicle speed along the x-axis $v_x$ is obtained as $v_x = V * \cos\theta \approx V$ according to the small angle approximation, and the vehicle speed along the y-axis $v_y$ is obtained as $v_y = V * \sin\theta \approx V * \theta$ according to the small angle approximation. Suppose that the yaw rate of the vehicle $\gamma$ is constant; since $\theta = \gamma * t$, a relationship holds so that $v_y = V * \gamma * t$. By integrating $v_y$ with respect to time, Eq. 1 may be derived. Since a person skilled in the art to which the present disclosure belongs may easily derive Eq. 1 by integrating the vehicle speed along the y-axis $v_y$, a detailed derivation process will be omitted.

The processor 120 may approximately calculate the vehicle's travel distance along the y-axis according to the vehicle's travel distance along the x-axis using Eq. 1.

The processor 120 may determine the approximate value $d_{Lat}$ of the object's lateral offset using Eq. 1 and the object's position information. Eq. 2 is an approximation for finding square roots, which uses Eq. 1 for calculating the approximate value $d_{Lat}$ of the lateral offset according to the present disclosure.

[Eq. 2]

$$ d_{Lat} = y_{obj} - y_{sv}(x_{obj}) = y_{obj} - \frac{1}{2} \rho \, x_{obj}^2 $$

In Eq. 2, $x_{obj}$ represents the x-axis coordinate of the object, and $y_{obj}$ represents the y-axis coordinate of the object. By inserting the object's x-axis coordinate $x_{obj}$ into the approximate equation of the driving trajectory, the processor 120 obtains the approximate value $y_{sv}(x_{obj})$, which represents the vehicle's travel distance when the vehicle has traveled a distance of $x_{obj}$. The processor 120 determines the difference between the object's y-axis coordinate $y_{obj}$ and the vehicle's y-axis coordinate $y_{sv}(x_{obj})$ as the approximate value $d_{Lat}$ of the object's lateral offset.

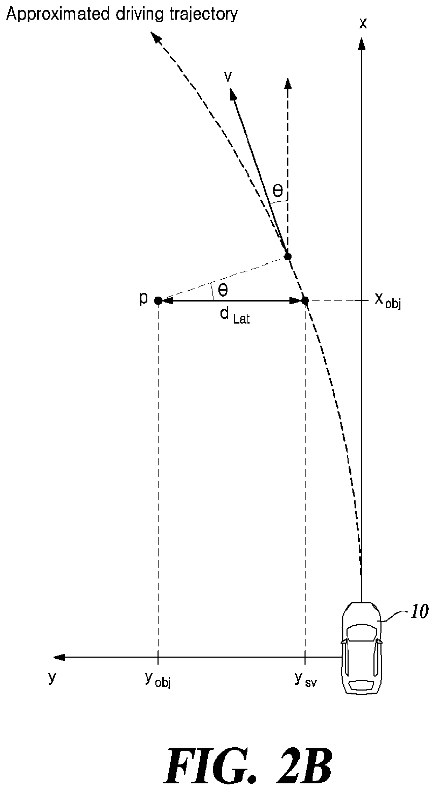

FIGS. 2a and 2b illustrate a method for calculating an approximate value $d_{Lat}$ of the lateral offset of a point included in a point cloud by a lateral offset calculation device 100 according to one embodiment of the present disclosure.

In FIG. 2a, $p$ represents a target point for which the lateral offset $D_{Lat}$ is to be calculated, and the coordinates of the target point are $(x_{obj}, y_{obj})$. The current position of the vehicle 10 is (0, 0), and $R$ represents the radius of curvature of the trajectory along which the vehicle 10 is driving. $d_{Lat}$ represents an approximate value of the lateral offset $D_{Lat}$ that is to be calculated using a method according to the present disclosure. $\theta$ represents the angle formed by a straight line passing through (0, $R$) and $(x_{obj}, y_{obj})$ relative to the y-axis and is equal to the heading angle of the vehicle 10 at the position where the lateral offset $D_{Lat}$ is to be calculated. It is assumed that $\theta$ is close to 0 to allow small angle approximation to be applied.

FIG. 2b is an enlarged view of a portion of FIG. 2a where the target point $p$ is located. $v$ represents the speed of the vehicle 10 at the target position, and $V$ represents the magnitude ($|v|$) of the vehicle speed $v$.

By using Eq. 1, the lateral offset calculation device 100 calculates the y-axis travel distance $y_{sv}$ of the vehicle when the vehicle's travel distance along the x-axis is $x_{obj}$. The lateral offset calculation device 100 calculates an approximate value $d_{Lat}$ of the lateral offset by inserting the y-axis coordinate $y_{obj}$ of the target point $p$ and the vehicle's y-axis travel distance $y_{sv}$ into Eq. 2. The lateral offset calculation device 100 calculates $d_{Lat}$ as an approximate value of the lateral offset $D_{Lat}$ for the target point $p$.

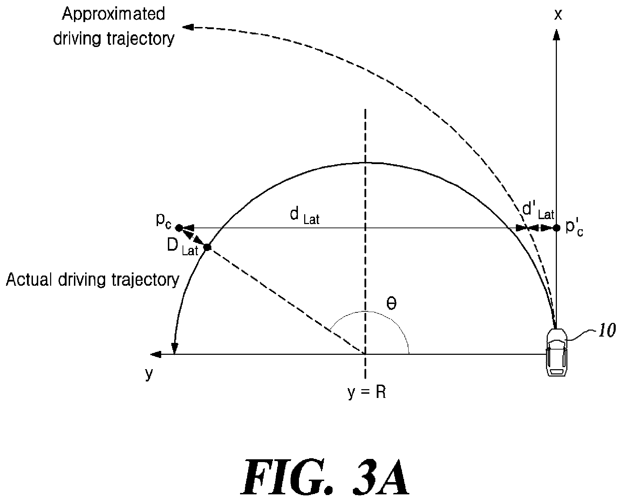

FIGS. 3a to 3c illustrate a method for calculating an approximate value $d_{Lat}$ of the lateral offset by the lateral offset calculation device 100 according to one embodiment of the present disclosure when small angle approximation is not applicable.

FIG. 3a illustrates a method for calculating an approximate value of a lateral offset for a target point $p$ when $\theta$ is greater than or equal to 135° ($\theta \geq 135°$), and the small angle approximation is not applicable. In FIG. 3a, $R$ is the radius of curvature of a trajectory along which the vehicle 10 is driving, and $p$ is a target point.

If $\theta$ is greater than or equal to 135° (i.e. the y-axis coordinate $y_{obj}$ of the object is greater than the radius of curvature $R$), the lateral offset calculation device 100 generates a symmetric point $p'$, which is obtained by applying the symmetric transformation to the target point $p$ with respect to the straight line $y = R$. The lateral offset calculation device 100 calculates the lateral offset $d'_{Lat}$ for the symmetric point $p'$ using Eq. 2. The lateral offset calculation device 100 uses the approximate value $d'_{Lat}$ of the lateral offset for the symmetric point $p'$ as an approximate value of the lateral offset $D_{Lat}$ for the target point $p$.

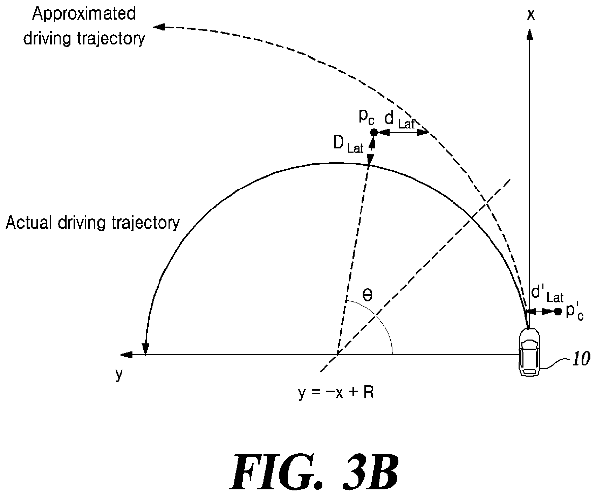

FIG. 3b illustrates a method for calculating an approximate value of a lateral offset for a target point $p$ when $\theta$ is greater than or equal to 45° and less than 90° ($45° \leq \theta < 90°$), and the small angle approximation is not applicable. In FIG. 3b, $R$ is the radius of curvature of a trajectory along which the vehicle 10 is driving, and $p$ is a target point.

If $\theta$ is greater than or equal to 45° and less than 90° (i.e. a sum of the y-axis coordinate $y_{obj}$ and the x-axis coordinate $x_{obj}$ is greater than the radius of curvature $R$), the lateral offset calculation device 100 generates a symmetric point $p'$, which is obtained by applying the symmetric transformation to the target point $p$ with respect to the straight line $y = -x + R$. The lateral offset calculation device 100 calculates the lateral offset $d'_{Lat}$ for the symmetric point $p'$ using Eq. 2. The lateral offset calculation device 100 uses the approximate value $d'_{Lat}$ of the lateral offset for the symmetric point $p'$ as an approximate value of the lateral offset $D_{Lat}$ for the target point $p$.

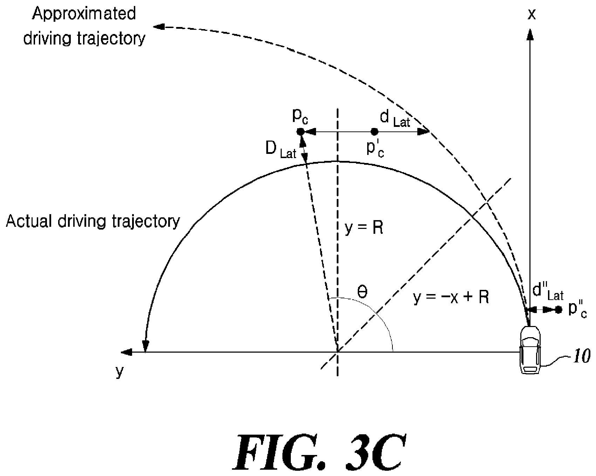

FIG. 3c illustrates a method for calculating an approximate value of a lateral offset for a target point $p$ when $\theta$ is greater than or equal to 90° and less than 135° ($90° \leq \theta < 135°$), and the small angle approximation is not applicable. In FIG. 3c, $R$ is the radius of curvature of a trajectory along which the vehicle 10 is driving, and $p$ is a target point.

If $\theta$ is greater than or equal to 90° and less than 135°, the lateral offset calculation device 100 generates a first symmetric point $p'$, which is obtained by applying the symmetric transformation to the target point $p$ with respect to the straight line $y = R$. Since the angle of the first symmetric point $p'$ is greater than or equal to 45° and less than 90°, the lateral offset calculation device 100 generates a second symmetric point $p''$, which is obtained by applying the symmetric transformation to the first symmetric point $p'$ with respect to the straight line $y = -x + R$. The lateral offset calculation device 100 calculates the lateral offset $d''_{Lat}$ for the second symmetric point $p''$ using Eq. 2. The lateral offset calculation device 100 uses the approximate value $d''_{Lat}$ of the lateral offset for the second symmetric point $p''$ as an approximate value of the lateral offset $D_{Lat}$ for the target point $p$.

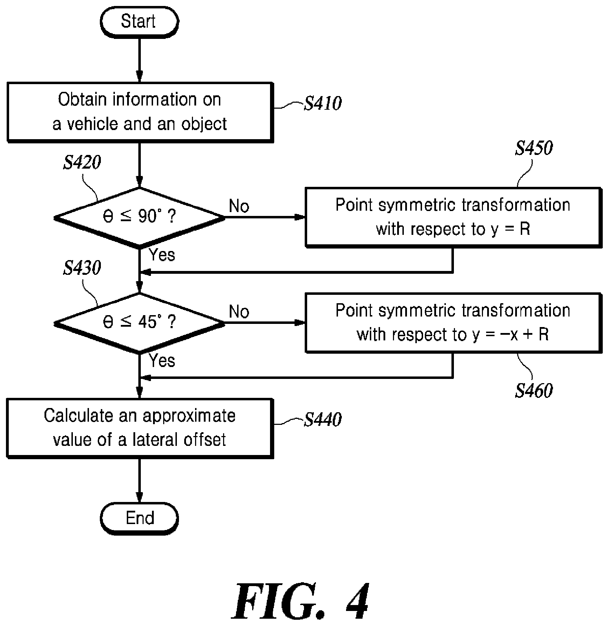

FIG. 4 is a flow diagram illustrating a process of calculating a lateral offset approximate value by the lateral offset calculation device 100 according to one embodiment of the present disclosure.

The lateral offset calculation device 100 obtains driving information of the vehicle and position information of the object using one or more sensors included in the vehicle 10 S410. The driving information of the vehicle may include the velocity, acceleration, steering angle, steering angular velocity, heading angle, and/or yaw rate of the vehicle. The position information of the object may include the position, speed, and other related information of the object. The position information of the object may be expressed as point cloud data. The point cloud data is obtained when an external object of the vehicle is sensed, and the point cloud data is expressed as a collection of points. Information on the object, such as the shape and position of the object, is expressed through point cloud data.

The lateral offset calculation device 100 determines whether $\theta$ is less than or equal to 90° S420. The lateral offset calculation device 100 may determine whether $\theta$ is less than or equal to 90° by calculating the radius of curvature $R$ of the vehicle's driving trajectory using the driving information of the vehicle and determining whether the y-axis coordinate of the target point $p$ is greater than or equal to the radius of curvature $R$.

If $\theta$ is less than or equal to 90°, the lateral offset calculation device 100 determines whether $\theta$ is less than or equal to 45° S430. The lateral offset calculation device 100 may determine whether $\theta$ is less than or equal to 45° by determining the sum of the x-axis coordinate $x_{obj}$ and the y-axis coordinate $y_{obj}$ of the target point $p$ is less than or equal to the radius of curvature ($x_{obj} + y_{obj} \leq R$).

If $\theta$ is less than or equal to 45°, the lateral offset calculation device 100 calculates the approximate value $d_{Lat}$ of the lateral offset for the symmetric point $p$ using Eq. 2 S440.

If $\theta$ is greater than 45° and less than or equal to 90°, the lateral offset calculation device 100 generates a first symmetric point $p'$, which is obtained by applying the symmetric transformation to the target point $p$ with respect to the straight line $y = -x + R$ S460. The lateral offset calculation device 100 calculates the approximate value of the lateral offset $d_{Lat}$ for the first symmetric point $p'$ using Eq. 2.

If $\theta$ is greater than 90°, the lateral offset calculation device 100 generates a first symmetric point $p'$, which is obtained by applying the symmetric transformation to the target point $p$ with respect to the straight line $y = R$ S450. The lateral offset calculation device 100 determines whether $\theta$ is less than or equal to 45° with respect to the first symmetric point $p'$ S430.

If $\theta$ is less than or equal to 45° with respect to the first symmetric point $p'$, the lateral offset calculation device 100 calculates the approximate value $d'_{Lat}$ of the lateral offset for the first symmetric point $p'$ using Eq. 2 S440.

If $\theta$ is greater than 45° with respect to the first symmetric point $p'$, the lateral offset calculation device 100 generates a second symmetric point $p''$, which is obtained by applying the symmetric transformation to the first symmetric point $p'$ with respect to the straight line $y = -x + R$ S460. The lateral offset calculation device 100 calculates the approximate value $d''_{Lat}$ of the lateral offset for the second symmetric point $p''$ using Eq. 2.

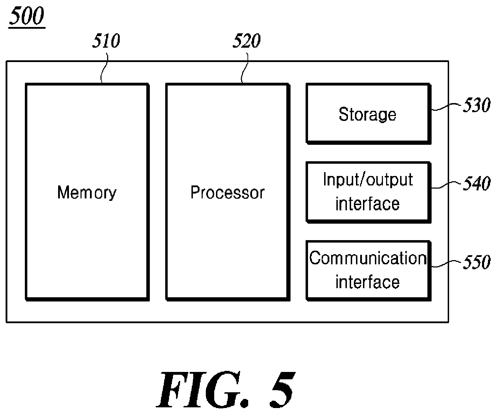

FIG. 5 is a block diagram of an exemplary computing device that may be used for implementing the method or the apparatus according to the present disclosure.

The computing device 500 may include all or part of a memory 510, a processor 520, storage 530, an input/output interface 540, and a communication interface 550. The computing device 500 may structurally and/or functionally include at least a portion of the lateral offset calculation device. The computing device 500 may be a stationary computing device, such as a desktop computer or a server, as well as a mobile computing device, such as a laptop computer, a smartphone, or an automotive electronic device. The computing device 500 may be implemented as an arbitrarily specialized hardware accelerator capable of efficiently processing operations devised for an artificial intelligence model. For example, the computing device 500 may include a graphics processing unit (GPU), a Tensor Processing Unit (TPU), or a neural processing unit (NPU).

The memory 510 may store a program that enables the processor 520 to perform methods or operations according to various embodiments of the present disclosure. For example, a program may include a plurality of instructions executable by the processor 520, and the methods or operations described above may be performed by executing the plurality of instructions by the processor 520. The memory 510 may consist of a single memory or a plurality of memories. In this case, information required to perform the methods or operation according to various embodiments of the present disclosure may be stored in a single memory or distributed across a plurality of memories. When the memory 510 is composed of a plurality of memories, the plurality of memories may be physically separated. The memory 510 may include at least one of volatile memory and non-volatile memory. Volatile memory includes Static Random Access Memory (SRAM) or Dynamic Random Access Memory (DRAM), while non-volatile memory includes flash memory.

The processor 520 may include at least one core capable of executing at least one instruction. The processor 520 may execute instructions stored in the memory 510. The processor 520 may consist of a single processor or a plurality of processors.

The storage 530 maintains stored data even if power supplied to the computing device 500 is cut off. For example, the storage 530 may include non-volatile memory or may include a storage medium such as a magnetic tape, an optical disk, or a magnetic disk. A program stored in the storage 530 may be loaded into the memory 510 before being executed by the processor 520. The storage 530 may store files written in a program language, and a program created from the files by a compiler may be loaded into the memory 510. The storage 530 may store data to be processed by the processor 520 and/or data processed by the processor 520.

The input/output interface 540 may provide an interface with an input device such as a keyboard or a mouse and/or an output device such as a display device or a printer. The user may trigger execution of a program by the processor 520 through the input device and/or check the processing results of the processor 520 through the output device.

The communication interface 550 may provide access to an external network. The computing device 500 may communicate with other devices through the communication interface 550.

Each element of the apparatus or method in accordance with the present invention may be implemented in hardware or software, or a combination of hardware and software. The functions of the respective elements may be implemented in software, and a microprocessor may be implemented to execute the software functions corresponding to the respective elements.

Various embodiments of systems and techniques described herein can be realized with digital electronic circuits, integrated circuits, field programmable gate arrays (FPGAs), application specific integrated circuits (ASICs), computer hardware, firmware, software, and/or combinations thereof. The various embodiments can include implementation with one or more computer programs that are executable on a programmable system. The programmable system includes at least one programmable processor, which may be a special purpose processor or a general purpose processor, coupled to receive and transmit data and instructions from and to a storage system, at least one input device, and at least one output device. Computer programs (also known as programs, software, software applications, or code) include instructions for a programmable processor and are stored in a "computer-readable recording medium."

The computer-readable recording medium may include all types of storage devices on which computer-readable data can be stored. The computer-readable recording medium may be a non-volatile or non-transitory medium such as a read-only memory (ROM), a random access memory (RAM), a compact disc ROM (CD-ROM), magnetic tape, a floppy disk, or an optical data storage device. In addition, the computer-readable recording medium may further include a transitory medium such as a data transmission medium. Furthermore, the computer-readable recording medium may be distributed over computer systems connected through a network, and computer-readable program code can be stored and executed in a distributive manner.

Although operations are illustrated in the flowcharts/timing charts in this specification as being sequentially performed, this is merely an exemplary description of the technical idea of one embodiment of the present disclosure. In other words, those skilled in the art to which one embodiment of the present disclosure belongs may appreciate that various modifications and changes can be made without departing from essential features of an embodiment of the present disclosure, that is, the sequence illustrated in the flowcharts/timing charts can be changed and one or more operations of the operations can be performed in parallel. Thus, flowcharts/timing charts are not limited to the temporal order.

Although exemplary embodiments of the present disclosure have been described for illustrative purposes, those skilled in the art will appreciate that various modifications, additions, and substitutions are possible, without departing from the idea and scope of the claimed invention. Therefore, exemplary embodiments of the present disclosure have been described for the sake of brevity and clarity. The scope of the technical idea of the present embodiments is not limited by the illustrations. Accordingly, one of ordinary skill would understand that the scope of the claimed invention is not to be limited by the above explicitly described embodiments but by the claims and equivalents thereof.

**Claims**

1. A method for calculating a lateral offset between a vehicle and an object, the method comprising:

   obtaining driving information of the vehicle and position information of the object using at least one sensor included in the vehicle, wherein the position information of the object comprises coordinates $(x_{obj}, y_{obj})$ of the object with respect to a reference coordinate system at the current time point;
   calculating a y-axis coordinate $y_{sv}$ of the vehicle according to a x-axis coordinate $x_{obj}$ of the vehicle using a driving trajectory approximation that represents a lateral travel distance according to a longitudinal travel distance of the vehicle, wherein the driving trajectory approximation is determined based on a small angle approximation and the driving information of the vehicle; and
   calculating the lateral offset using the y-axis coordinate $y_{sv}$ of the vehicle and the y-axis coordinate $y_{obj}$ of the object.

2. The method of claim 1, wherein the position information of the object is point cloud data comprising the information on the shape and position of the object, and the calculating of the lateral offset comprises calculating a lateral offset of each of points in the point cloud data.

3. The method of claim 1 or 2, wherein the driving trajectory approximation is determined based on an assumption that each of a yaw rate and a speed of the vehicle is constant.

4. The method of anyone of claims 1-3, further comprising:
   if the object is located in an area in which the small angle approximation is not applicable, converting the coordinates of the object to an area where the small angle approximation is applicable.

5. The method of claim 4, wherein the converting the coordinates of the object to the area where the small angle approximation is applicable comprises:

   calculating radius of curvature $R$ of a driving trajectory of the vehicle based on the driving information of the vehicle; and
   applying symmetric transformation to the coordinates of the object with respect to a straight line $y = R$ if the y-axis coordinate $y_{obj}$ of the object is greater than the radius of curvature $R$.

6. The method of claim 5, wherein the converting the coordinates of the object to the area where the small angle approximation is applicable further comprises:
   applying symmetric transformation to the coordinates of the object with respect to a straight line $y = -x + R$ if a sum of the y-axis coordinate $y_{obj}$ and the x-axis coordinate $x_{obj}$ is greater than the radius of curvature $R$.

7. An apparatus for calculating a lateral offset between a vehicle and an object, the apparatus comprising:

   at least one memory configured to store one or more instructions; and
   at least one processor configured to execute one or more instructions stored in the memory, wherein the at least one processor executes the one or more instructions to:

   obtain driving information of the vehicle and position information of the object using at least one sensor included in the vehicle, wherein the position information of the object comprises coordinates $(x_{obj}, y_{obj})$ of the object with respect to a reference coordinate system at the current time point;
   calculate a y-axis coordinate $y_{sv}$ of the vehicle according to a x-axis coordinate $x_{obj}$ of the vehicle using a driving trajectory approximation that represents a lateral travel distance according to a longitudinal travel distance of the vehicle, wherein the driving trajectory approximation is determined based on a small angle approximation and the driving information of the vehicle; and
   calculate the lateral offset using the y-axis coordinate $y_{sv}$ of the vehicle and the y-axis coordinate $y_{obj}$ of the object.

**8.** The apparatus of claim 7, wherein the position information of the object is point cloud data comprising the information on the shape and position of the object, and the lateral offset is calculated based on a lateral offset of each of points in the point cloud data.

**9.** The apparatus of claim 7 or 8, wherein the driving trajectory approximation is determined based on an assumption that each of a yaw rate and a speed of the vehicle is constant.

**10.** The apparatus of anyone of claims 7-9, wherein the processor is further to:
if the object is located in an area in which the small angle approximation is not applicable, convert the coordinates of the object to an area where the small angle approximation is applicable.

**11.** The apparatus of claim 10, wherein, if the y-axis coordinate $y_{obj}$ of the object is greater than radius of curvature $R$ of a driving trajectory of the vehicle, symmetric transformation is applied to the coordinates of the object with respect to a straight line $y = R$.

**12.** The apparatus of claim 11, wherein, if a sum of the y-axis coordinate $y_{obj}$ and the x-axis coordinate $x_{obj}$ is greater than the radius of curvature $R$, symmetric transformation is applied to the coordinates of the object with respect to a straight line $y = -x + R$.

_100_

Lateral offset calculation device

_110_        _120_

Memory → Processor

# FIG. 1

Approximated driving trajectory

x

Actual driving trajectory

$D_{Lat}$

p

$d_{Lat}$

θ

10

y

y = R

# FIG. 2A

Approximated driving trajectory

**FIG. 2B**

**FIG. 3A**

FIG. 3B

**FIG. 3C**

Start

Obtain information on
a vehicle and an object $\quad$ ~S410

S420

θ ≤ 90° ? $\quad$ No $\longrightarrow$ Point symmetric transformation
with respect to y = R $\quad$ S450

Yes

S430

θ ≤ 45° ? $\quad$ No $\longrightarrow$ Point symmetric transformation
with respect to y = −x + R

Yes $\quad$ S460

Calculate an approximate
value of a lateral offset $\quad$ ~S440

End

# FIG. 4

<u>*500*</u>

*510*　　　　*520*

| Memory | Processor | Storage |
| | | ~*530* |
| | | Input/output interface ~*540* |
| | | Communication interface ~*550* |

# FIG. 5

# EUROPEAN SEARCH REPORT

**Application Number**

EP 25 18 0469

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2018/204460 A1 (DENG KUN [US] ET AL) 19 July 2018 (2018-07-19) * abstract; figure 4 * * paragraphs [0008], [0014] * * paragraphs [0028] - [0034] * * paragraphs [0037], [0051] * ----- | 1-12 | INV. G01S7/48 G01S17/89 G01S17/931 |

**TECHNICAL FIELDS SEARCHED (IPC)**

G01S

The present search report has been drawn up for all claims

| Place of search | Date of completion of the search | Examiner |
|---|---|---|
| Munich | 31 October 2025 | Knoll, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 700 428 A1

## ANNEX TO THE EUROPEAN SEARCH REPORT
## ON EUROPEAN PATENT APPLICATION NO.

EP 25 18 0469

31-10-2025

| Patent document cited in search report | Publication date | Patent family member(s) | Publication date |
|---|---|---|---|
| US 2018204460 A1 | 19-07-2018 | CN 108327716 A | 27-07-2018 |
| | | DE 102018101106 A1 | 19-07-2018 |
| | | GB 2560245 A | 05-09-2018 |
| | | RU 2018101192 A | 15-07-2019 |
| | | US 2018204460 A1 | 19-07-2018 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240112680